## Europäisches Patentamt
## European Patent Office
## Office européen des brevets

(11) Veröffentlichungsnummer: **0 177 817**
**B1**

# EUROPÄISCHE PATENTSCHRIFT

(45) Veröffentlichungstag der Patentschrift:
24.02.88

(21) Anmeldenummer: 85111919.8

(22) Anmeldetag: 20.09.85

(51) Int. Cl.⁴: **B 60 T 8/50**

(54) Antiblockierregelsystem.

(30) Priorität: 29.09.84 DE 3435870

(43) Veröffentlichungstag der Anmeldung:
16.04.86 Patentblatt 86/16

(45) Bekanntmachung des Hinweises auf die Patenterteilung:
24.02.88 Patentblatt 88/8

(84) Benannte Vertragsstaaten:
AT DE FR GB IT SE

(56) Entgegenhaltungen:
DE-A-2 460 904
DE-A-2 518 196
DE-A-2 528 792
US-A-4 517 647

(73) Patentinhaber: ROBERT BOSCH GMBH, Postfach 50, D-7000 Stuttgart 1 (DE)

(72) Erfinder: Leiber, Heinz, Ing.- grad., Theodor-Heuss- Strasse 34, D-7141 Oberriexingen (DE)
Erfinder: Jonner, Wolf- Dieter, Dipl.- Ing. (FH), Burgunderstrasse 25, D-7141 Beilstein (DE)
Erfinder: Czinczel, Armin, Dipl- Ing., In den seiten 29, D-7015 Korntal- Münchingen 2 (DE)

(74) Vertreter: Kammer, Arno, Dipl.- Ing., ROBERT BOSCH GmbH Zentralabteilung Patente Postfach 50, D-7000 Stuttgart 1 (DE)

EP 0 177 817 B1

**Beschreibung**

Die Erfindung betrifft ein Antiblockierregelsystem mit den Merkmalen des Oberbegriffs des Anspruches 1.

Ein derartiges Antiblockierregelsystem ist aus der Figur 2 der DE-A-24 60 904 bekannt. Dort wird grundsätzlich vorgeschlagen, den ersten Druckaufbauimpuls nach einer Druckabsenkung abhängig zu machen von dem Druckaufbau in einem oder mehreren vorhergehenden Regelzyklen. Für den ersten Regelzyklus, bei dem es keinen Druckaufbau in einem vorhergehenden Regelzyklus gibt, wird die Druckaufbaudauer abhängig gemacht von der Dauer der vorhergehenden Druckabsenkung oder von der errichten Druckdifferenz bei der ersten Druckabsenkung oder auch von der Fahrzeugverzögerung oder Temperatur der Bremsflüssigkeit.

Der Erfindung bezweckt bei einem Antiblockierregelsystem der eingangs genannten Art eine optimale Bemessung des auf den Druckabbau folgenden Druckaufbauimpulses. Dies wird mit den Merkmalen des unabhängigen Anspruchs 1 erreicht. Besondere Ausführungsarten der Erfindung sind in den abhängigen Ansprüchen angegeben.

Bei dem erfindungsgemäßen Antiblockierregelsystem wird grundsätzlich eine Verknüpfung des vorhergehenden Druckabbaus mit einem Ausdruck vorgeschlagen, der die maximale Radwinkelverzögerung $-\dot{\omega}$ und maximale Radwinkelbeschleunigung $+\dot{\omega}$ berücksichtigt. Hierdurch wird ein sehr viel feinfühligeres Heranführen des Bremsdrucks an den Druck möglich, an dem die Instabilität einsetzt. Besonders vorteilhaft ist es, die angegebene Bemessung des Druckaufbauimpulses mit einer Druckregelung zu verbinden, d.h., den Bremsdruck zu messen und rückzuführen, so daß tatsächlich auf den vorbestimmten Druckwert $\Delta p_2$ eingeregelt wird. Wegen der vielen eingehenden Parameter kann mit der bekannten zeitabhängigen Druckeinsteuerung diese Genauigkeit nicht erreicht werden.

Dagegen wird es mit der obige Kombination möglich, nach erfolgtem Druckabbau und anschließender Druckhaltephase den Druck mit einer ersten Druckstufe soweit anzuheben, daß der Blockierdruck nahezu erreicht wird. Dies wird bei der Bemessung gemäß folgender Formel erreicht:

$$\Delta p_2 = \alpha \cdot \frac{|+\dot{\omega}_m|}{|-\dot{\omega}_m| + |+\dot{\omega}_m|} \cdot \Delta p_1,$$

wenn $\alpha$ etwas kleiner als 1, z. B. 0,9 ist.

Durch die Erfassung und Berücksichtigung der maximalen Winkelverzögerung $-\dot{\omega}_m$ und -beschleunigung $+\dot{\omega}_m$ wird die Dynamik des Rades einschließlich der Fahrbahngriffigkeit und Störungen in der Regelstrecke zuverlässig erfaßt, so daß der anschließende Druckaufbauimpuls optimal bemessen werden kann. Dies sichert optimale Bremswege und eine große Fahrzeugstabilität.

Die Erfassung des Radbremsdruckes kann weiter dazu benutzt werden, die Druckanpassung $\Delta p_2$ aktiv in der Weise zu steuern, daß bei Kurvenbremsungen der Druck langsamer als sonst aufgebaut wird, wodurch das Rad länger im stabilen Gebiet geführt wird, so daß Stabilität bzw. Lenkbarkeit erhöht sind. Darüber hinaus ist es möglich, durch Differenzieren der Querbeschleunigung, d.h., durch die Erfassung der Querbeschleunigungsabnahme beim Bremsvorgang einen definierten Druckabbau so zu bemessen, daß das Rad mit geringem Bremsschlupf und großer Seitenstabilität läuft.

Der erwähnte Gedanke, mit Hilfe der Erfassung des Druckes eine optimale Druckanpassung zu erreichen, ist besonders wirtschaftlich, wenn Geber, die ohnehin systembedingt eingesetzt werden, für die Druckerfassung mitverwendet werden können, wie z. B. bei elektronischen Bremssystemen oder auch bei Bremssystemen mit Wegsimulator und Verstellung des Hauptbremszylinders durch die Regelung, deren Hauptzylinderkolbenwege mit Sensoren abgetastet werden können.

Anhand der Zeichnung soll ein Ausführungsbeispiel der Erfindung näher erläutert werden.

Es zeigen:

Fig. 1 - eine Prinzipdarstellung eines erfindungsgemäßen Antiblockierregelsystems,

Fig. 2 - ein Blockschaltbild eines Teils der Auswerteschaltung,

Fig. 3 - ein Diagramm zur Erläuterung der Wirkungsweise,

Fig. 4 und 5 - Momenten-Diagramme über dem Bremsschlupf.

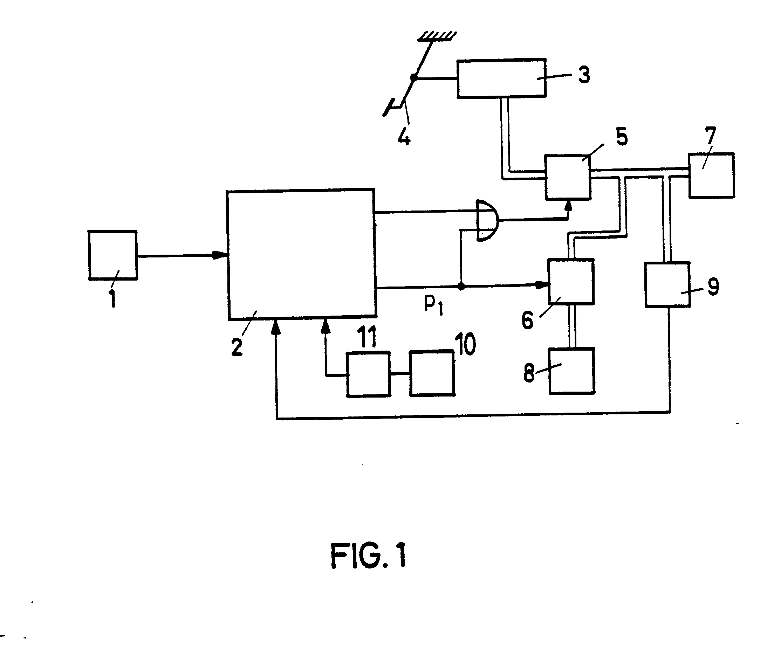

In Figur 1 ist mit 1 ein einem Fahrzeugrad zugeordneter Meßwertgeber bezeichnet, der ein von der Radgeschwindigkeit abgehängiges Signal einer Auswerteschaltung 2 zuführt, die Bremsdrucksteuersignale für ein Einlaßventil 6 und ein Auslaßventil 6 erzeugt. Diese Ventile 5 und 6 sind in bzw. an eine Bremsleitung zwischen einem durch ein Pedal 5 betätigten Hauptbremszylinder 3 und einer Radbremse 7 ein- bzw. angeschaltet.

Eine Rückförderung für die vom Auslaßventil 6 abgelassene Bremsflüssigkeit trägt das Bezugszeichen 8, ein Druckmesser, dessen vom Druck an der Bremse 7 abhängiges Signal der Auswerteschaltung 2 zugeführt wird, das Bezugszeichen 9.

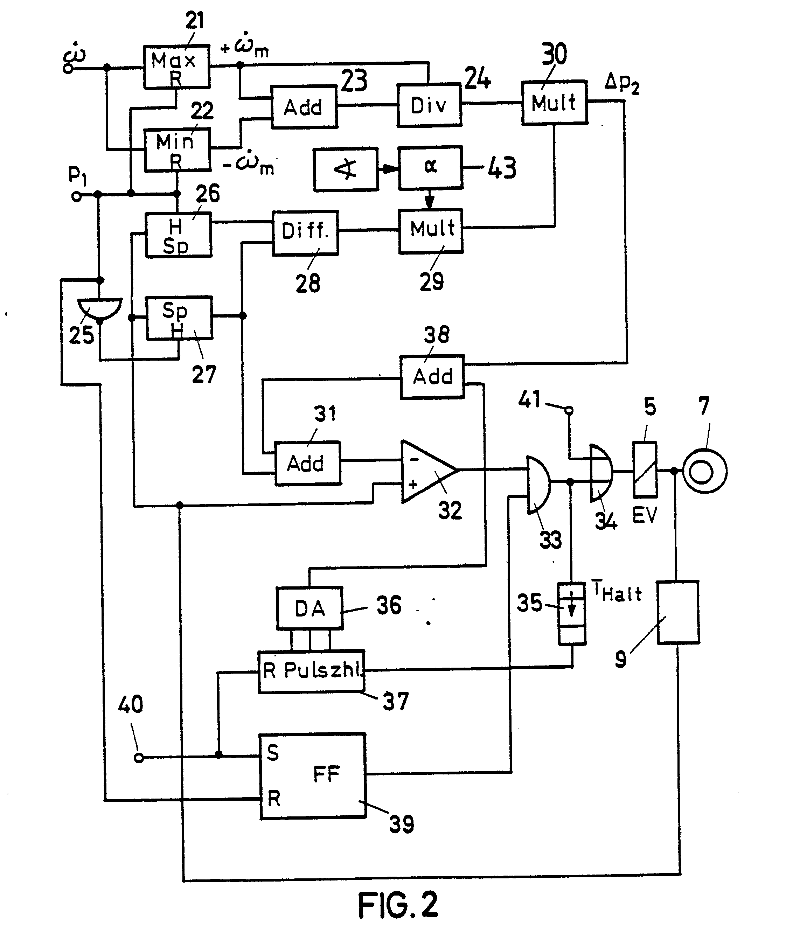

Die Auswerteschaltung 2 erzeugt in an sich bekannter Weise Druckabbau- ($p_1$), Druckkonstanthaltungs- ($p_c$) und Druckaufbausignale ($p_2$). Das Druckaufbausignal stellt dabei den Befehl für den Beginn und die Dauer des Druckaufbaus dar. Die Art, wie in dieser Zeitspanne Druck aufgebaut wird, wird durch ein in der Auswerteschaltung 2 enthaltenen Auswerteschaltungsteil bestimmt, das in einem beispielhaften Blockschaltbild in Figur 2 dargestellt ist. Die Auswerteschaltung 2 weist ein nicht dargestelltes Differenzierglied auf, das aus dem Radgeschwindigkeitssignal ω ein dem Radgeschwindigkeitssignal ω entsprechendes Signal bildet.

Figur 2 zeigt den Logikplan für die Druckaufbausteuerung. Aus der Radwinkelbeschleunigung $\dot{\omega}$ bilden eine Maximumschaltung 21 und eine Minimumschaltung 22 die Extremwerte der Radwinkelbeschleunigung $+\dot{\omega}_m$ und $-\dot{\omega}_m$. In einen Addierer 33 werden die Beträge der Blöcke 21 und 22 addiert. Ein Dividierer 24 bildet den Quotienten $\frac{|+\dot{\omega}_m|}{|+\dot{\omega}_m| + |-\dot{\omega}_m|}$.

In zwei Speichern 25 und 27 wird der mit dem Druckmesser 9 gemessene Radbremsdruck p zu Beginn des Druckabbaus ($p_1$-Beginn) und am Ende des Druckabbaus ($p_1$-Ende; Inverter 25) gespeichert. Das $p_1$-Beginn-Signal setzt auch jeweils die Extremwertschaltungen 21 und 22 zurück. In einem Subtrahierer 28 wird die Differenz dieser Drücke und somit die Druckstufe $\Delta p_1$ gebildet. Der Ausgangswert des Subtrahierers 28 wird in einem Multiplizierer 29 mit α = 0,9 aus dem Block 43 multipliziert. Mittels eines Lenkwinkelmessers 42 kann der Faktor α bei Kurvenfahrt verkleinert werden. In einem weiteren Multiplizierer 30 erfolgt dann die Multiplikation mit dem Ausgang des Dividierers 24, so daß am Ausgang des Multiplizierers 30 ein dem Term

$$\Delta p_2 = 0,9 \cdot \frac{|+\dot{\omega}_m|}{|+\dot{\omega}_m| + |-\dot{\omega}_m|} \cdot \Delta p_1$$

entsprechendes Signal ansteht.

In einem weiteren Addierer 31 wird zum im Speicher 27 gespeicherten Radbremsdruckniveau nach dem Druckabbau der errechnete Druckaufbauimpuls JD $p_2$ hinzuaddiert. Sobald der vom Druckmesser 9 ermittelte Radbremsdruck das im Addierer 31 gebildete Druckniveau überschreitet, erzeugt ein Komparator 32 eine logische 1, die über ein UND-Glied 33 und ein ODER-Glied 34 das Einlaßventil 5 ansteuert, d.h,, den Druckaufbau stoppt. Das UND-Glied 33 ist nur dann durchschaltbar, wenn ein Flip-Flop 39 durch das Signal "Druckaufbau" an der Klemme 40 gesetzt wurde. Durch das Signal "$p_1$" wird dieses Flip-Flop zurückgesetzt.

Die erwähnten kleinen Druckaufbaustufen, die auf den errechneten ersten Druckaufbaupuls JD $p_2$ folgen, werden in einem Pulszähler 37 aufbereitet, der über ein Zeitglied 35, das jeweils die Haltephase bestimmt, angesteuert wird. Über einen Wandler 36 werden Signale einem Addierer 38 zugeführt. Über die Glieder 31, 32, 33 und ein ODER-Gatter 34 erfolgt das pulsförmige Ansteuern des Einlaßventils 5. Die vom Wandler 35 abgegebenen Signale, die die Höhe der weiteren Druckaufbauimpulse JD p bestimmen, können unterschiedlich hoch sein.

Der Bremsdruck in der Radbremse 7 wird hier vom Druckmesser 9 gemessen. Die Druckmessung kann bei Hauptzylinderanordnungen in Twinbauweise auch durch eine Abtastung der Hauptzylinderkolbenwege erfolgen, wenn der Hauptbremszylinder durch die Antiblockierregelung verstellt wird, was eine besonders wirtschaftliche Meßmethode darstellt. Über eine Klemme 41 wird ein Signal für das Einlaßventil eingekoppelt, wenn Druckabbau oder Konstanthaltung verlangt wird. In Fig. 1 ist noch ein Querbeschleunigungsmesser 10 für das Fahrzeug dargestellt. Sein Ausgangssignal wird in einem Block 11 differenziert und dessen Signal der Auswerteschaltung 2 zugeführt. Dieses zugeführte Signal bewirkt eine Verlängerung des Druckabbauzeitraums, wenn die Querbeschleunigung abnimmt.

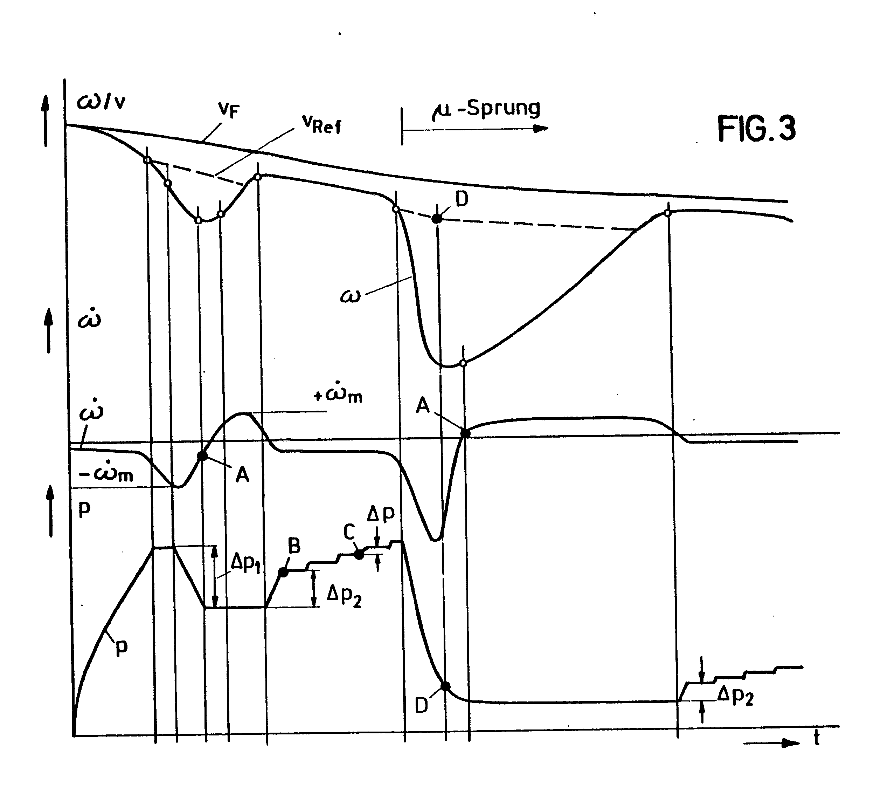

In Figur 3 ist oben der Verlauf der Fahrzeuggeschwindigkeit $v_F$, der Referenzgeschwindigkeit $v_{Ref}$ für die Schlupfmessung und der Radwinkelgeschwindigkeit ω für einen angenommenen Bremsverlauf mit Antiblockierregelung und μ-Sprung dargestellt. In dem darunter befindlichen Verlauf für die Radwinkelbeschleunigung $\dot{\omega}$ sind die Extremwerte $-\dot{\omega}_m$ und $+\dot{\omega}_m$ im ersten Regelzyklus eingezeichnet. Das untere Diagramm gibt den Druckverlauf und den gemessenen Druckwert $\Delta p_1$ und den ermittelten Druckwert $\Delta p_2$ für den ersten Druckaufbauimpuls sowie $\Delta_p$ für die weiteren Impulse wieder.

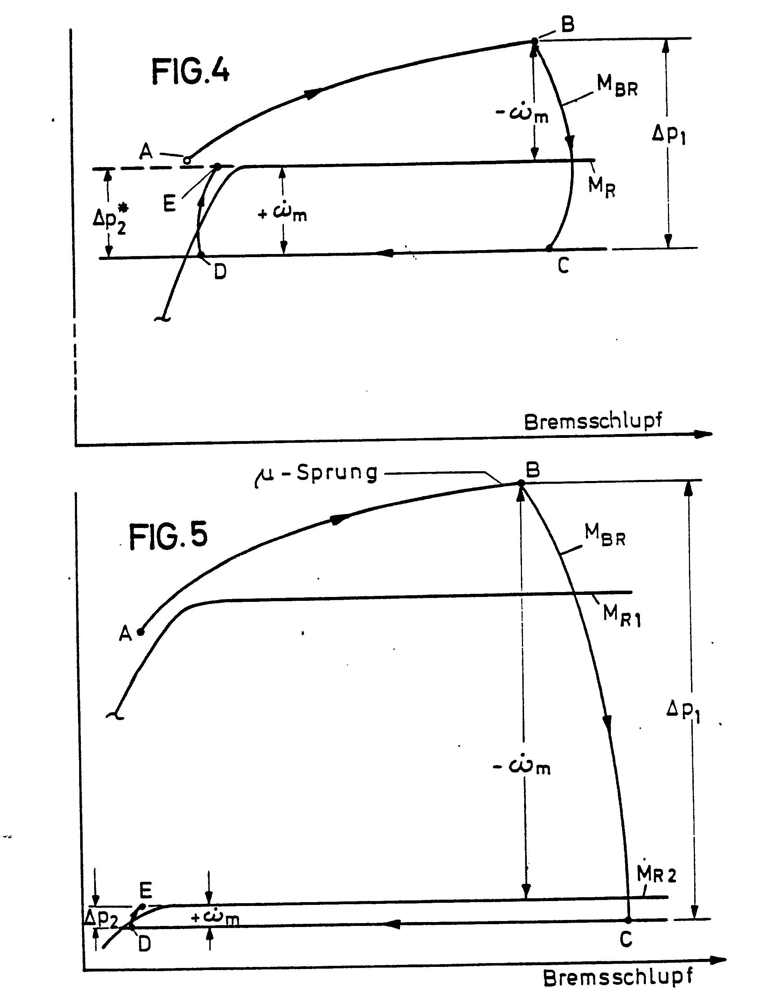

Die mit den Buchstaben A-D bezeichneten Punkte entsprechen den Punkten A-D in den Figuren 4 und 5. Dort ist über dem Bremsschlupf das Bremsmoment $M_{BR}$ bzw. das Fahrbahnreibmoment $M_R$ aufgetragen.

Figur 4 zeigt das Prinzip der Druckaufbaumessung, abhängig von der Druckabbaustufe $\Delta p_1$ und den maximalen Radwinkelbeschleunigungen $+\dot{\omega}_m$ und $-\dot{\omega}_m$. Das Fahrbahnreibmoment ist gegeben zu $M_R = \mu_B N \cdot r$, wobei $\mu_B$ der Reibkoeffizient zwischen Rad und Fahrbahn, N die Aufstandskraft des Rades und r der dynamische Rollradius des Rades ist. Da Bremsmoment $M_{BR}$ ist angenähert proportional zum Bremsdruck.

Beim Abbremsen wächst zunächst das Bremsmoment $M_{BR}$ gemäß dem Kurvenzug von A nach B an, wobei der Bremsschlupf zunimmt. Im Punkt B wird der Bremsdruckabbau begonnen und zwar um den Betrag $\Delta p_1$ längs des Kurvenzuges B-C.

Zwischen dem Bremsmoment in Punkt B und dem Fahrbahnreibmoment $M_R$ entsteht die maximale Radwinkelverzögerung $-\dot{\omega}_m$. Längs des Kurvenzuges C-D wird der Druck konstant gehalten, zwischen dem Bremsmoment $M_{BR}$ in diesem Bereich und dem Reibmoment $M_R$ tritt die maximale Winkelbeschleunigung $+\dot{\omega}_m$ auf. Der Druck, wird im Punkt D um den Betrag $\Delta p_2$ erhöht (nach E).

Aus dieser Figur läßt sich die Beziehung

$$\frac{\Delta p_2}{\Delta p_1} = \frac{|+\dot{\omega}_m|}{|-\dot{\omega}_m| + |+\dot{\omega}_m|}$$

ableiten.

Wählt man statt $\Delta p_2$ für den Druckabbau $\Delta p_2 = \alpha \cdot \Delta p_2{}^\bullet$ und $\alpha$ zu 0,9, so erhält man die schon bekannte Gleichung

$$\Delta p_2 = \alpha \; \frac{|+\dot\omega_m|}{|-\dot\omega_m| + |+\dot\omega_m|} \cdot \Delta p_1$$

Aus der Figur 5 ergibt sich die optimale Anpassung der Druckaufbaubemessung an der hier angenommenen sprungartigen Änderung des Fahrbahnreibwertes ($\mu$-Sprung). Kurz vor Erreichen des Punktes C findet ein $\mu$-Sprung vom $M_{R1}$ auf $M_{R2}$ statt. Die Figur zeigt, daß die Druckstufe $\Delta p_2$ optimal festgelegt wird. Die Betrachtung obiger Gleichung zeigt, daß dies in diesem Beispiel auf den sehr großen Term $-\dot\omega_m$ zurückzuführen ist, der die verhältnismäßig kleine Druckaufbaustufe $\Delta p_2$ zur Folge hat.

**Patentansprüche**

1. Antiblockierregelsystem für Fahrzeuge enthaltend Meßwertgeber zur EErfassung des Radbewegungsverhalts, einer Auswerteschaltung, der die Signale der Meßwertgeber zugeführt werden und die daraus Bremsdrucksteuersignale erzeugt und einer Bremsdrucksteuereinrichtung, der diese Signale zugeführt werden und die den Bremsdruck an den Radbremsen variiert, wobei der Bremsdruckaufbau nach einer Druckabsenkung zuerst mittels eines ersten Druckaufbauimpulses erfolgt, dessen Druckhöhe $\Delta p_2$ von dem Maß des vorhergehenden Druckabbaus $\Delta p_1$ abhängt und wobei sich an diesem Druckaufbauimpuls weitere Druckaufbauimpulse mit geringer Druckhöhe abschließen, dadurch gekennzeichnet, daß die Druckhöhe $\Delta p_2$ des ersten Druckaufbauimpulses zusätzlich von einem Quotienten Q abhängig ist, dessen Größe einerseits von der maximalen Winkelbeschleunigung und andererseits von der maximalen Winkelverzögerung abhängt.

2. Antiblockierregelsystem nach Anspruch 1, dadurch gekennzeichnet, daß der quotient durch die maximale Radbeschleunigung $+\dot\omega_m$ dividiert durch die Summe der Beträge der maximalen Radbeschleunigung $+\dot\omega_m$ und der maximalen Radverzogerung $-\dot\omega_m$ gegeben ist.

3. Antiblockierregelsystem nach den Ansprüche 1 oder 2, dadurch gekennzeichnet, daß die Druckhöhe $\Delta p_2$ des ersten Druckaufbauimpulses proportional dem Druckabbau $\Delta p_1$, dem Quotienten q und einem Faktor $\alpha$ nahe 1 ist.

4. Antiblockierregelsystem nach einem der Ansprüche 1 bis 3, dadurch gekennzeichnet, daß bei Kurvenfahrt die Höhe $\Delta p_2$ des ersten Druckaufbauimpulses kleiner bemessen ist (durch Verringerung des Faktors $\alpha$).

5. Antiblockierregelsystem nach einem der Ansprüche 1 bis 4, dadurch gekennzeichnet, daß die Höhe des Druckabbaus $\Delta p_1$ zusatzlich nach Maßgabe der Querbeschleunigungsabnahme bemessen ist, derart, daß die Höhe der Querbeschleunigungsabnahme die Verlängerung des normalen Druckabbaus $\Delta p_1$ bestimmt und somit den Radschlupf vermindert.

5. Antiblockierregelsystem nach einem der Ansprüche 1 bis 5, dadurch gekennzeichnet, daß die Bemessung zumindest des ersten Druckaufbauimpulses ($\Delta p_2$) durch Druckmessung (9) und Einregelung über einen Regelkreis (32-34) erfolgt.

**Claims**

1. Anti-block control system for vehicles including measurement signal generators for recording the wheel motion behaviour, an analysis circuit, to which the signals of the measurement signal generators are supplied and which generates braking pressure control signals from it and a braking pressure control device to which these signals are supplied and which varies the braking pressure at the wheel brakes, the brake pressure build-up after a pressure reduction taking place first by means of a first pressure build-up pulse, whose pressure height $\Delta p_2$ depends on the dimension of the preceding pressure build-up $\Delta p_1$ and further pressure build-up pulses with lower pressure heights following from this pressure build-up pulse, characterized in that the pressure height $\Delta p_2$ of the first pressure build-up pulse is additionally dependent on a quotient Q whose magnitude depends, on the one hand, on the maximum angular acceleration and, on the other, on the maximum angular deceleration.

2. Anti-block control system according to Claim 1, characterized in that the quotient is given by the maximum wheel acceleration $+\dot\omega_m$ divided by the sum of the magnitudes of the maximum wheel acceleration $+\dot\omega_m$ and the maximum wheel deceleration $-\dot\omega_m$.

3. Anti-block control system according to Claims 1 or 2, characterized in that the pressure height $\Delta p_2$ of the first pressure build-up pulse is proportional to the pressure reduction $\Delta p_1$, the quotient Q and a factor $\alpha$ near 1.

4. Anti-block control system according to one of the claims 1 to 3, characterized in that in the case of travel in a curve, the height, $\Delta p_2$ of the first pressure build-up pulse is dimensioned smaller (by reducing the factor $\alpha$).

5. Anti-block control system according to one of the claims 1 to 4, characterized in that the height of the pressure decrease $\Delta p_1$ is additionally dimensioned according to the amount of the reduction in transverse acceleration in such a way that the height of the reduction in the transverse acceleration determines the extension of the normal pressure reduction $\Delta p_1$ and, by this means, reduces the wheel slip.

6. Anti-block control system according to one of the claims 1 to 5, characterized in that the dimensioning of at least the first pressure build-

up pulse ($\Delta p_2$) takes place by means of pressure measurement (9) and regulation via a control circuit (32-34).

mesure de pression (9) et le réglage par l'intermédiaire d'un cercle de réglage (32, 34).

**Revendications**

1. Système régulateur anti-blocage pour véhicules automobiles, comprenant un indicateur de valeurs mesurées pour l'enregistrement du comportement du mouvement de la roue, un circuit d'exploitation, auquel les signaux de l'indicateur de valeurs mesurées sont transmis et qui, de ce fait, produit les signaux de commande de pression de freinage, et un dispositif de commande de pression de freinage auquel ces signaux sont transmis et qui fait varier la pression de freinage dans les freins de roues, grâce à quoi la réalisation de la pression de freinage après une chute de pression se produit d'abord au moyen d'une première impulsion de réalisation de pression, dont le niveau de pression $\Delta p_2$ dépend de la mesure de la chute de pression précédente $\Delta p_1$, et, de ce fait, les impulsions ultérieures de réalisation de pression se distinguent de cette impulsion de réalisation de pression par un faible niveau de pression; caractérisé en ce que le niveau de pression $\Delta p_2$ de la première impulsion de réalisation de pression dépend de plus d'un quotient Q, dont la grandeur dépend, d'un côté de l'accélération angulaire maximale, et de l'autre côté de la décélération angulaire maximale.

2. Système régulateur anti-blocage selon la revendication 1, caractérisé en ce que le quotient Q est donné par l'accélération maximale de la roue $+\dot{\omega}_m$ divisée par la somme des valeurs de l'accélération maximale de la roue $+\dot{\omega}_m$ et de la décélération maximale de la roue $-\dot{\omega}_m$.

3. Système régulateur anti-blocage selon les revendications 1 ou 2, caractérisé en ce que le niveau de pression $\Delta p_2$ de la première impulsion de réalisation de pression est proportionnel à la chute de pression $\Delta p_1$, au quotient Q et à un facteur $\alpha$ voisin de 1.

4. Système régulateur anti-blocage selon l'une des revendications 1 à 3, caractérisé en ce que dans l'évolution de la courbe, le niveau de pression $\Delta p_2$ de la première impulsion de réalisation de pression est mesuré par défaut (du fait de la diminution du facteur $\alpha$).

5. Système régulateur anti-blocage selon l'une des revendications 1 à 4, caractérisé en ce que le niveau de la chute de pression $\Delta p_1$ est de plus mesuré au fur et à mesure de la diminution de l'accélération moyenne, de sorte que le niveau de la diminution de l'accélération moyenne détermine l'allongement de la chute normale de pression $\Delta p_1$, et par suite diminue le glissement de la roue.

6. Système régulateur anti-blocage selon l'une des revendications 1 à 5, caractérisé en ce que la mesure au moins de la première impulsion de réalisation de pression ($\Delta p_2$) se produit par la

**FIG. 1**

FIG.2

FIG.3

FIG.4

FIG.5